# EUROPÄISCHE PATENTSCHRIFT

(11) **EP 2 496 805 B1**
(45) Veröffentlichungstag und Bekanntmachung des Hinweises auf die Patenterteilung: **16.03.2016**
(21) Anmeldenummer: 10773864.3
(22) Anmeldetag: 04.11.2010
(51) Int. Cl.: F02B 37/013, F02B 29/04, F02B 75/22, F02B 67/10

(54) **V-MOTOR**
V ENGINE
MOTEUR EN V

(30) Priorität: 06.11.2009 DE 102009052209
(43) Veröffentlichungstag der Anmeldung: 12.09.2012
(73) Patentinhaber: MTU Friedrichshafen GmbH, 88045 Friedrichshafen (DE)
(72) Erfinder: GUNKEL, Rolf, 88048 Friedrichshafen (DE); HENSSLER, Felix, 78462 Konstanz (DE); HIRY, Johannes, 88069 Tettnang (DE); REITZ, Jörg, Andre, 88682 Salem (DE); WIEDMANN, Martin, 78467 Konstanz (DE)
(74) Vertreter: Schimek, Wolfgang Stefan
(86) Internationale Anmeldenummer: PCT/EP2010/006719
(87) Internationale Veröffentlichungsnummer: WO 2011/054513

(56) Entgegenhaltungen:
- EP-A2- 1 998 022
- DD-A1- 154 904
- DE-A1- 3 633 405
- DE-A1- 4 017 823
- FR-A1- 2 917 124
- GB-A- 437 078
- US-A- 3 027 706
- US-A- 3 976 041

## Beschreibung

Die vorliegende Erfindung betrifft einen V-Motor.

Im Stand der Technik ist es bekannt, Brennkraftmaschinen bzw. Motoren auch hoher Leistung aufzuladen, z.B. mittels mechanischen Ladern oder Abgasturboladern. Derartige Motoren sind z.B. Diesel-Motoren, wie z.B. Schiffsantriebs- oder Industriemotoren, z.B. mit einer Leistung im Bereich mehrerer hundert kW. Es sind dabei sowohl Aufladesysteme mit einem Abgasturbolader je Zylinderbank z.B. gemäß der EP 0 952 329 A2 oder DE 4017823 bekannt, als auch solche mit mehrstufiger Aufladung, z.B. mehreren Turboladern je Zylinderbank.

Auch auf dem Gebiet solcher leistungsstarker Brennkraftmaschinen sind zukünftig strengere Abgasnormen zu erfüllen. Um den Emissionsvorgaben bzw. Anforderungen gerecht zu werden, z.B. der Abgasnorm EPA TIER 4, muss eine Brennkraftmaschine der fraglichen Art mittels z.B. emissionsreduzierender Technologien entsprechend ausgebildet werden, wobei der Bedarf an Bauraum regelmäßig erheblich ist.

Ausgehend hiervon liegt der vorliegenden Erfindung die Aufgabe zugrunde, einen emissionsarmen Motor vorzuschlagen, insbesondere einen Motor im Leistungsbereich größer 500kW, welcher oben genannte Nachteile überwindet und eine äußerst kompakte Bauweise insbesondere durch die Anordnung des Aufladesystems ermöglicht.

Diese Aufgabe wird erfindungsgemäß durch die Merkmale des Anspruchs 1 gelöst.

Vorgeschlagen wird erfindungsgemäß ein V-Motor, insbesondere ein Dieselmotor, mit einer ersten und einer zweiten Zylinderbank, wobei der V-Motor zur zweistufigen Aufladung mittels eines Niederdruckabgasturboladers sowie eines Hochdruckabgasturboladers ausgebildet ist, wobei je ein Niederdruckabgasturbolader sowie je ein Hochdruckabgasturbolader stirnseitig je an einer Zylinderbank über einem Hauptabtriebselement des V-Motors angeordnet ist.

Bei einer erfindungsgemäßen Ausführungsform des V-Motors weist der V-Motor in einem ersten und einem zweiten Ladeluftstrang zur Führung eines Ladeluftstroms jeweils in Strömungsrichtung einen Niederdruckverdichter, einen Zwischenladeluftkühler sowie einen Hochdruckverdichter auf, wobei je ein Niederdruckverdichter je in einem Niederdruckabgasturbolader und je ein Hochdruckverdichter je in einem Hochdruckabgasturbolader angeordnet ist, und wobei der erste und der zweite Ladeluftstrang an einen Hauptladeluftkühler zusammengeführt sind, wobei je ein Ladeluftstrom stromabwärts des Hauptladeluftkühlers an die erste und zweite Zylinderbank geführt wird, und wobei je eine Abgasrückführung mit je einem Abgasrückkühler je Zylinderbank vorgesehen ist, mittels welcher gekühltes Abgas der jeweiligen Zylinderbank in den Ladeluftstrom zur jeweiligen Zylinderbank stromabwärts des Hauptladeluftkühlers einbringbar ist.

Bei einer weiteren erfindungsgemäßen Ausführungsform des V-Motors weist der V-Motor je Zylinderbank einen über einem Zylinderkopf angeordneten Abgasrückkühler auf.

Bei noch einer weiteren erfindungsgemäßen Ausführungsform des V-Motors ist an jeder Zylinderbank ein Zwischenladeluftkühler vorgesehen, welcher zwischen je einem an der jeweiligen Zylinderbank angeordneten Abgasrückkühler und den stirnseitig angeordneten Niederdruck- und Hochdruckabgasturboladern der Zylinderbank angeordnet ist.

Weiterhin ist bei einer erfindungsgemäßen Ausführungsform des V-Motors vorgesehen, dass ein Hauptladeluftkühler zwischen den über einem Zylinderkopf je einer Zylinderbank angeordneten Abgasrückkühlern angeordnet ist, insbesondere zwischen den Schenkeln der V-Form des V-Motors angeordnet ist.

Gemäß einer weiteren erfindungsgemäßen Ausführungsform des V-Motors wird Abgas, insbesondere gekühltes Abgas, von je einer Zylinderbank mittels eines Mischerelements in einen Ladeluftstrom stromabwärts des Hauptladeluftkühlers eingebracht.

Vorgeschlagen wird erfindungsgemäß ein V-Motor, wobei das Mischerelement an einer dem Hauptabtriebselement abgewandten Stirnseite des Hauptladeluftkühlers angeordnet ist.

Bei einem Aspekt des erfindungsgemäßen V-Motors sind die Abgasrückkühler und/oder die Hochdruckabgasturbolader und/oder die Niederdruckabgasturbolader und/oder der Hauptladeluftkühler und/oder die Zwischenladeluftkühler symmetrisch zu einer Mittelachse A des V-Motors angeordnet.

Bei einer weiteren erfindungsgemäßen Ausführungsform des V-Motors sind die Niederdruckabgasturbolader sowie die Hochdruckabgasturbolader an einer Kraftseite des V-Motors angeordnet.

Bei noch einer weiteren erfindungsgemäßen Ausführungsform des V-Motors sind die Niederdruckverdichter des ersten und zweiten Niederdruckabgasturboladers mittels eines dazwischen angeordneten Ansauggehäuses verbunden.

Gemäß noch einer weiteren erfindungsgemäßen Ausführungsform des V-Motors ist je ein Niederdruckabgasturbolader mit je einem Hochdruckabgasturbolader in Reihe geschaltet an je einer Zylinderbank, insbesondere stirnseitig, angeordnet.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnungen näher erläutert. Es zeigen:
Fig. 1 exemplarisch ein Ladeluft- und Abgas-Strömungsdiagramm in einem V-Motor gemäß einer möglichen Ausführungsform der Erfindung;
Fig. 2 exemplarisch eine Darstellung des V-Motors in einer Stirnansicht gemäß einer möglichen Ausführungsform der Erfindung;

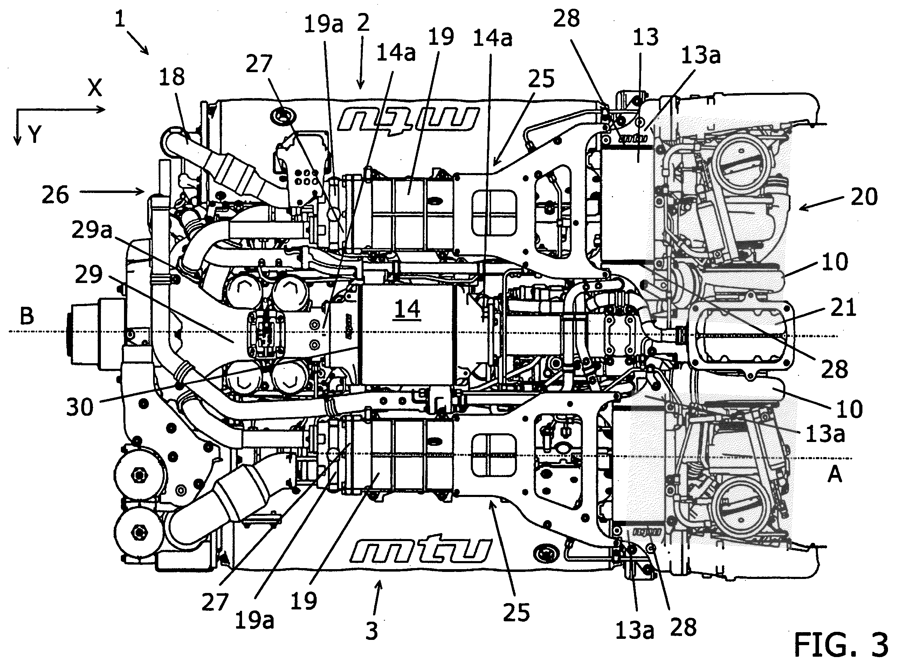

Fig. 3 exemplarisch eine Darstellung des V-Motors von Fig. 2 in einer Draufsicht;
Fig. 4 exemplarisch eine Darstellung des V-Motors von Fig. 2 in einer Seitenansicht.

In der nachfolgenden Beschreibung und den Zeichnungen entsprechen gleichen Bezugszeichen Elemente gleicher oder vergleichbarer Funktion.

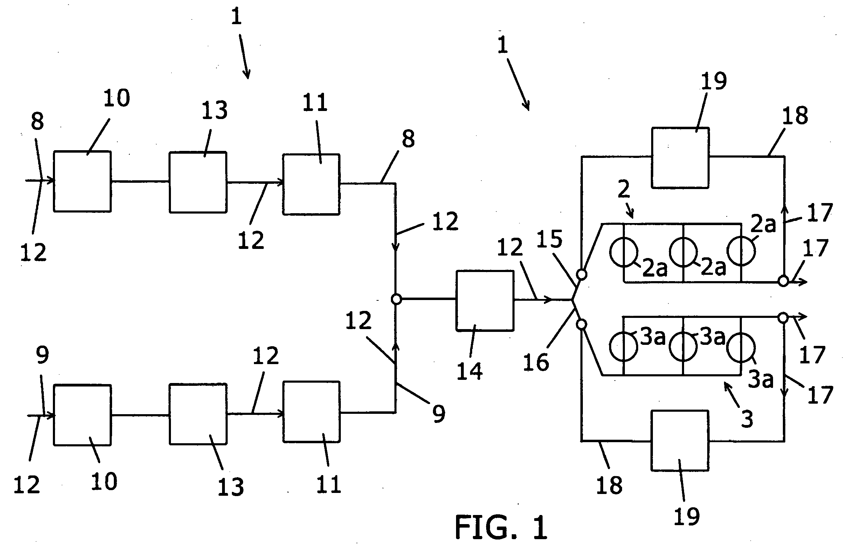

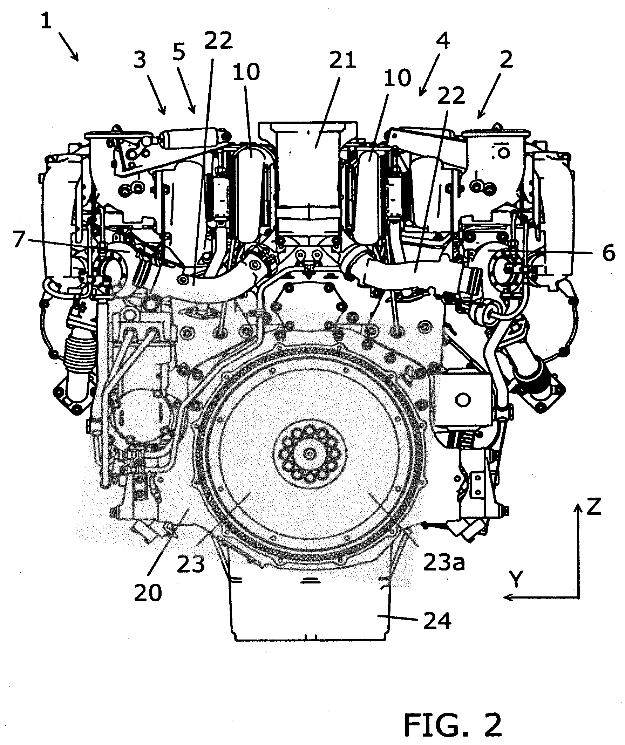

Um eine kompakte Bauform einer Brennkraftmaschine zu ermöglichen, ist erfindungsgemäß ein V-Motor 1 vorgesehen (z.B. Fig.1, 2). Der V-Motor 1 weist gegenüber z.B. einem Reihenmotor in der Regel kürzere Längsabmessungen auf und eignet sich für eine kompakte Bauform. Der V-Motor 1, z.B. ein Dieselmotor oder ein Benzinmotor, weist auf bekannte Weise eine erste 2 und eine zweite 3 Zylinderbank auf, die einen Bankwinkel zwischen theoretisch 1 bis 180 Grad aufweisen können, z.B. einen Bankwinkel von 90 Grad aufweisen. Der erfindungsgemäße V-Motor 1, z.B. ein Motor mit einer hohen Leistung über 500kW, weist eine Anordnung zur Leistungssteigerung, insbesondere zur regelbaren Leistungssteigerung, durch Aufladung (Motoraufladung) auf. Vorgesehen ist insbesondere eine zweistufige, z.B. zweistufig geregelte, Aufladung, wobei ein Abgasstrom z.B. jeweils einen ersten z.B. HochdruckAbgasturbolader anströmt und nachfolgend z.B. einen NiederdruckAbgasturbolader. Eine Regelung kann dabei z.B. über einen Bypass auf bekannte Weise erfolgen.

Erfindungsgemäß ist vorgesehen, den V-Motor 1 mittels eines ersten 4 und eines zweiten 5 Niederdruckabgasturboladers sowie mittels eines ersten 6 und eines zweiten 7 Hochdruckabgasturboladers zweistufig aufzuladen. Dazu werden z.B. jeweils der erste Niederdruckabgasturbolader 4 und der erste Hochdruckabgasturbolader 6 an z.B. der ersten Zylinderbank 2 angeordnet und der zweite Niederdruckabgasturbolader 5 und der zweite Hochdruckabgasturbolader 7 an der zweiten Zylinderbank 3, derart, dass zunächst zwei Ladeluftstränge 8 bzw. 9 gebildet werden, die stromabwärts zu einem einzigen Ladeluftstrang zusammengeführt werden können. Die ersten Abgasturbolader 4, 6 sowie die zweiten Abgasturbolader 5, 7 werden dabei jeweils z.B. ausschließlich von einem Abgasstrom der jeweiligen Zylinderbank 2, 3 angetrieben, welcher sie zugeordnet sind, z.B. je mittels ihrer im jeweiligen Abgasstrom angeordneten Turbinenräder. Mittels eines derartigen Turbinenrads ist im Niederdruckabgasturbolader 4 bzw. 5 jeweils ein Niederdruckverdichter 10 auf bekannte Weise antreibbar, bzw. im Hochdruckabgasturbolader 6, 7 jeweils ein Hochdruckverdichter 11.

Erfindungsgemäß ist vorgesehen, dass je ein Niederdruckabgasturbolader 4 bzw. 5 mit je einem Hochdruckabgasturbolader 6 bzw. 7 an je einer Zylinderbank 2 bzw. 3 in Reihe geschaltet ist, um die zweistufige Aufladung zu realisieren, d.h. ein Abgasstrom ausgehend von je z.B. einer Zylinderbank 2, 3 durchströmt zunächst den z.B. Hochdruckabgasturbolader 6 bzw. 7 und treibt diesen an, um anschließend den Niederdruckabgasturbolader 4 bzw. 5 anzuströmen und anzutreiben. Insofern sind je ein Hochdruckabgasturbolader 6 bzw. 7 und je ein Niederdruckabgasturbolader 4 bzw. 5 hinsichtlich ihrer (Antriebs-)Turbinen bzw. deren Anströmung in Reihe geschaltet, i.e. antriebsmäßig in Reihe geschaltet.

Um z.B. strenge Abgasnormen, z.B. die Abgasnorm EPA TIER 4 i oder EPA TIER 4 final zu erfüllen, weist der V-Motor 1 im Rahmen der vorgesehenen zweistufigen, insbesondere geregelten, Aufladung neben den Abgasturboladern 4, 5, 6, 7 z.B. eine Abgasrückführung mit einem Abgasrückkühler auf, einen Zwischenladeluftkühler und einen Hauptladeluftkühler. Eine beispielhafte erfindungsgemäße Anordnung derselben im Zusammenhang mit der (Motor-)Aufladung wird nachfolgend anhand Fig. 1 erläutert.

Der V-Motor 1 weist, wie oben erwähnt, z.B. einen ersten 8 und einen zweiten 9 Ladeluft-(Leitungs-)Strang auf, welcher jeweils zur Führung der Ladeluft 12 in Richtung (der Brennkammern) einer Zylinderbank 2, 3 vorgesehen ist. In dem jeweiligen Ladeluft-Leitungsstrang 8, 9 sind Komponenten zur Kühlung und Verdichtung der Ladeluft 12 angeordnet. Vorliegend weist je ein Ladeluftstrang 8 bzw. 9 eingangs- bzw. ansaugseitig einen Niederdruckverdichter 10 auf, z.B. je eines Niederdruckabgasturboladers 4 bzw. 5. Die mittels eines Niederdruckverdichters 10 vorverdichtete Ladeluft wird einem stromabwärts (in Strömungsrichtung zu einer Zylinderbank 2, 3) angeordneten Zwischenladeluftkühler 13 zugeführt und mittels eines jeweiligen Hochdruckverdichters 11, z.B. jeweils eines Hochdruckabgasturboladers 6 bzw. 7, weiter verdichtet bzw. komprimiert.

Die derart verdichtete Ladeluft 12 des ersten 8 und zweiten 9 Ladeluftstrangs wird zusammengeführt und mittels eines stromabwärts angeordneten Hauptladeluftkühlers 14 erneut abgekühlt. Durch die Kühlung mittels der Zwischenladeluftkühler 13 und des Hauptladeluftkühlers 14 wird eine stickoxidarme bzw. -reduzierte Verbrennung durch Absenken der Verbrennungstemperatur in einer Brennkammer erreicht.

Die mittels des Hauptladeluftkühlers 14 abgekühlte Ladeluft 12 wird stromabwärts des Hauptladeluftkühlers 14 in einen ersten 15 und einen zweiten 16 (Teil-)Ladeluftstrom geteilt, welche jeweils einer Zylinderbank 2, 3 (mit z.B. jeweils 3 oder mehr Zylindern 2a bzw. 3a) zum Zwecke der Verbrennung zugeführt werden. Das im Zuge einer Verbrennung in einer Zylinderbank 2, 3 jeweils anfallende Abgas 17 wird mittels einer Abgasrückführung 18 z.B. jeweils in den ersten 15 bzw. zweiten 16, sich dem Hauptladeluftkühler 14 stromabwärts anschließenden (Teil-)Ladeluftstrom anteilig zugeführt, z.B. um die Brenntemperatur zum Zwecke einer emissionsarmen Verbrennung einzustellen. Es ist auch denkbar, das Abgas 17 in einen gemeinsamen Ladeluftstrom vor der Verzweigung in Teilladeluftströme einzuleiten.

Die Abgasrückführung 18 ist je als z.B. Bypass ausgebildet und weist z.B. jeweils einen, z.B. jeweils genau einen, Abgasrückkühler 19 zur Senkung der Abgastemperatur auf, womit die Verbrennungstemperatur infolge einer Einleitung des derart abgekühlten Abgases in den ersten oder zweiten Ladeluftstrom 15 bzw. 16 wiederum abgesenkt und ein Stickoxidausstoß weiter reduziert werden kann. Der Abgasrückkühler 19 ist z.B. ein bekannter Abgasrückkühler, z.B. mit einem Edelstahl-Kühlelement, welcher z.B. mittels Kühlwasser kühlt.

Um den V-Motor 1 mit den angestrebten kompakten Abmessungen realisieren zu können, ist erfindungsgemäß vorgesehen, die Niederdruckabgasturbolader 4 bzw. 5 sowie die Hochdruckabgasturbolader 6 bzw. 7 stirnseitig an den Zylinderbänken 2, 3 des V-Motors 1 anzuordnen, insbesondere an jeweils an derselben Seite des V-Motors 1 befindlichen Stirnseiten der Zylinderbänke 2, 3, z.B. insbesondere jeweils an der Kraftseite 20, an welcher ein Hauptabtriebselement 23 angeordnet ist. Stirnseitig bezeichnet dabei ein Außenende des V-Motors 1 bzw. der Zylinderbank 2, 3 in Richtung der nebeneinander liegenden Zylinder (2a, 3a) einer Zylinderbank 2 bzw. 3 (in X-Richtung). Die Anordnung erfolgt dabei insbesondere z.B. derart, dass je ein Niederdruckabgasturbolader 4 bzw. 5 zusammen mit je einem Hochdruckabgasturbolader 6 bzw. 7 stirnseitig an je einer Zylinderbank 2 bzw. 3 angeordnet ist. Ein Niederdruckabgasturbolader 4 bzw. 5 ist dabei jeweils z.B. in Reihe mit jeweils einem Hochdruckabgasturbolader 6 bzw. 7 angeordnet.

Dabei werden je ein Niederdruckabgasturbolader 4 bzw. 5 und je ein Hochdruckabgasturbolader 6 bzw. 7 an einer Zylinderbank 2, 3 jeweils z. B. am oberen Ende des V-Motors 1, z.B. in Höhe des Zylinderkopfes 25, angeordnet, z.B. zusammen mit weiteren Komponenten zur Aufladung, z.B. einem Ansaug- bzw. Ladelufteintrittsgehäuse 21, welches zwischen den Niederdruckverdichtern 10 des ersten 4 und zweiten 5 Niederdruckabgasturboladers angeordnet sein kann, Leitungs- bzw. Verbindungsrohren 22, Druckdosen, etc.

Die Niederdruckabgasturbolader 4, 5 ebenso wie die Hochdruckabgasturbolader 6, 7 sind dabei insbesondere über dem Hauptabtriebselement 23, welches z.B. mittels eines Schwungrads 23a des V-Motors 1 ausgebildet sein kann, angeordnet, also in Richtung von einer Ölwanne 24 hin (Z-Richtung) zu dem Zylinderkopf 25 oberhalb des Hauptabtriebselements 23. Der Begriff Hauptabtriebselement 23 bezeichnet dabei das Element, welches zur Übertragung des größten Teils der Motorenergie auf ein anzutreibendes Element vorgesehen ist (Welle, Schwungrad, etc). Durch eine derartige erfindungsgemäße Anordnung bleiben auf der Kraftgegenseite 26 (Lüfterseite) angeordnete Komponenten wie z.B. Ölfilter, Kraftstoffilter etc. zugänglich, wodurch die Servicefreundlichkeit gesteigert wird.

Ferner ist zur Realisierung der kompakten Abmessungen des V-Motors 1 vorgesehen, Abgasrückkühler 19, z.B. jeweils genau einen Abgasrückkühler 19, jeweils über einem Zylinderkopf 25 je einer Zylinderbank 2, 3 anzuordnen. Die Abgasrückkühler 19 werden insbesondere jeweils derart angeordnet, dass zwischen einem den Abgasturboladern 4, 6 bzw. 5, 7 zugewandten Ende eines Abgasrückkühlers 19 und den Abgasturboladern 4, 6 bzw. 5, 7 jeweils ein Einbauraum gebildet bzw. eröffnet wird, der die Aufnahme bzw. Anordnung eines Zwischenladeluftkühlers 13 ermöglicht. Ein Zwischenladeluftkühler 13 ist insofern jeweils auf bzw. über (in Z-Richtung) einer Zylinderbank 2, 3 jeweils zwischen einem Abgasrückkühler 19 und Hochdruck- bzw. Niederdruckabgasturboladern 4, 6 bzw. 5, 7 angeordnet, z.B. in Richtung von der Kraftgegenseite 26 zur Kraftseite 20 (X-Richtung) zwischen denselben.

Erfindungsgemäß ist, insbesondere zum Zwecke einer kompakt bauenden, platzsparenden Leitungsanordnung, z.B. zur Führung der Ladeluft, vorgesehen, den Abgasrückkühler 19 z.B. jeweils mit seiner Längsachse A in X-Richtung ausgerichtet anzuordnen, derart, dass an einer z.B. Stirnseite 27 des Abgasrückkühlers 19 angeordnete Anschlüsse 19a für die Abgasversorgung bzw. Abgasabgabe jeweils in Richtung zur Kraft- bzw. Kraftgegenseite angeordnet sind, vorzugsweise z.B. in Richtung zur Kraftgegenseite. Ferner ist zu demselben Zweck vorgesehen, den Zwischenladeluftkühler 13 z.B. jeweils derart anzuordnen, dass je z.B. an einer Stirnseite 28 angeordnete Anschlüsse 13a für einen Hoch- bzw. Niederdruckverdichter 11 bzw. 10 um 90 Grad versetzt zur X- und Z-Richtung angeordnet sind (Y-Richtung).

Ferner sieht die Erfindung zur Realisierung eines äußerst kompakten, emissionsarmen V-Motors 1 vor, einen Hauptladeluftkühler 14, insbesondere z.B. genau einen Hauptladeluftkühler 14, zwischen der ersten 2 und der zweiten 3 Zylinderbank anzuordnen, z.B. zwischen den Schenkeln des V in der durch die Zylinderbänke 2, 3 gebildeten V-Form. Der Hauptladeluftkühler 14 ist insbesondere zwischen den Abgasrückkühlern 19 der ersten und der zweiten Zylinderbank angeordnet, also in Richtung von der ersten Zylinderbank 2 zur zweiten Zylinderbank 3 zwischen den Abgasrückkühlern 19 (Y-Richtung). Wiederum zum Zwecke einer kompakten Motoranordnung des V-Motors 1 sind Ladeluftein- und auslässe 14a des Hauptladeluftkühlers 14 z.B. ebenfalls in X-Richtung angeordnet, so dass der Hauptladeluftkühler 14 z.B. von der Kraftseite 20 her anströmbar ist, eine Ladeluftabfuhr z.B. in Richtung Kraftgegenseite 26 erfolgt. Somit können Leitungselemente für die Ladeluftführung ebenfalls zwischen den Zylinderbänken 2, 3 und somit im Sinne einer klein bauenden Anordnung angeordnet werden.

Erfindungsgemäß ist zur Mischung bzw. Beimengung des mittels je der Abgasrückführung 18 rückgeführten Abgases mit dem bzw. in den Ladeluftstrom 12, bzw. 15, 16 (z.B. bis zu 60% des gesamten Abgases) stromabwärts des Hauptladeluftkühlers 14 z.B. ein Mischerelement z. B. in Form eines Mischergehäuses 29, z.B. genau eines Mischergehäuses 29, vorgesehen. Ein solches Mischergehäuse 29 erlaubt die geordnete Zudosierung bzw. Mischung des Abgases 17 mit der verdichteten Ladeluft. Das Mischergehäuse 29 ist z.B. an einer den Abgasturboladern 4, 5, 6, 7 abgewandten Seite, z.B. einer (kraftgegenseitigen) Stirnseite 30, des Hauptladeluftkühlers 14 angeordnet, z.B. ebenfalls zwischen den Schenkeln der V-Form bzw. erster 2 und zweiter 3 Zylinderbank. Das Mischergehäuse 29 ist z.B. weiterhin dazu vorgesehen, den am Hauptladeluftkühler 14 zusammengeführten Ladeluftstrom 12 zur Bildung des ersten 15 und zweiten 16 Ladeluftstroms für je eine Zylinderbank 2, 3 zu teilen. Das Mischergehäuse 29 ist zum Beispiel derart angeordnet, dass dessen Anschlüsse 29a zur Anströmung bzw. Ladeluftabgabe im Wesentlichen in X-Richtung ausgerichtet sind, wobei die Anschlüsse zur Ladeluftabgabe z.B. in Richtung Kraftgegenseite ausgerichtet sind.

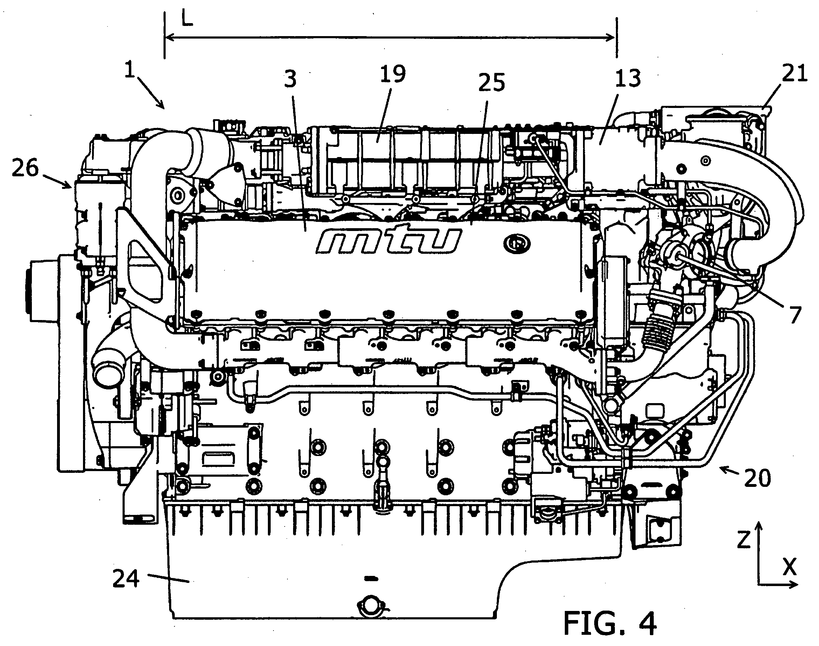

Bei der erfindungsgemäßen Anordnung der zur Aufladung bzw. von zur Emissionsreduzierung vorgesehenen Komponenten, kann ein äußerst kompakter V-Motor 1 realisiert werden. Z.B. kann eine Bauform realisiert werden, bei der das Verhältnis von Motorlänge in X-Richtung mit stirnseitig angeordneten Abgasturboladern 4, 5, 6, 7 zur Länge des Grundmotors L kleiner als der Faktor 1,4 ist (Fig. 4). Dabei ist die Anordnung der Abgasturbolader 4, 5, 6, 7 und/oder der Abgasrückkühler 19 und/oder der Zwischenladeluftkühler 13 und/oder des Hauptladeluftkühlers 14 symmetrisch zu einer Mittelachse B des V-Motors 1 in X-Richtung vorgesehen. Dabei liegen sich z.B. je zwei Abgasrückkühler 19, je zwei Zwischenladeluftkühler 13 und/oder je zwei Abgasturbolader 4, 5 bzw. 6, 7 entlang der Achse B gegenüber.

Bei der erfindungsgemäßen Anordnung der Abgasturbolader 4, 5, 6, 7 stirnseitig an den Zylinderbänken 2, 3 oberhalb des Hauptabtriebselements 23 des V-Motors 1, kann eine Beeinträchtigung der Funktionalität und der Zugänglichkeit des Hauptabtriebselements 23 vermieden werden, insofern als sich das Hauptabtriebselement 23 und die Abgasturbolader 4, 5, 6, 7 in Y-Richtung und Z-Richtung nicht überlappen.

## Patentansprüche

1. V-Motor (1), insbesondere ein Dieselmotor, mit einer ersten (2) und einer zweiten (3) Zylinderbank, wobei der V-Motor (1) zur zweistufigen Aufladung mittels eines Niederdruckabgasturboladers (4, 5) sowie eines Hochdruckabgasturboladers (6, 7) ausgebildet ist, wobei je ein Niederdruckabgasturbolader (4, 5) sowie je ein Hochdruckabgasturbolader (6, 7) an einem stirnseitigen Außenende des V-Motors je an einer Zylinderbank (2, 3) über einem Hauptabtriebselement (23) des V-Motors (1) angeordnet ist, wobei die Niederdruckverdichter (10) des ersten (4) und zweiten (5) Niederdruckabgasturboladers mittels eines dazwischen angeordneten Ansauggehäuses (21) verbunden sind, wobei der V-Motor (1) je Zylinderbank (2, 3) einen über einem Zylinderkopf (25) angeordneten Abgasrückkühler (19) aufweist, wobei ein Hauptladeluftkühler (14) zwischen den über einem Zylinderkopf (25) je einer Zylinderbank (2, 3) angeordneten Abgasrückkühlern (19) angeordnet ist, und wobei an jeder Zylinderbank (2, 3) je ein separater Zwischenladeluftkühler (13) vorgesehen ist, welcher zwischen je einem an der jeweiligen Zylinderbank (2, 3) angeordneten Abgasrückkühler (19) und den stirnseitig angeordneten Niederdruck und Hochdruckabgasturboladern (4, 5, 6, 7, ) der Zylinderbank (2, 3) angeordnet ist.

2. V-Motor (1) nach Anspruch 1 , **dadurch gekennzeichnet, dass** der V-Motor (1) in einem ersten (8) und einem zweiten Ladeluftstrang (9) zur Führung eines Ladeluftstroms (12) jeweils in Strömungsrichtung einen Niederdruckverdichter (10), einen Zwischenladeluftkühler (13) sowie einen Hochdruckverdichter (11) aufweist, wobei je ein Niederdruckverdichter (10) je in einem Niederdruckabgasturbolader (4, 5) und je ein Hochdruckverdichter (11) je in einem Hochdruckabgasturbolader (6, 7) angeordnet ist, und wobei der erste (8) und der zweite (9) Ladeluftstrang an einen Hauptladeluftkühler (14) zusammengeführt sind, wobei je ein Ladeluftstrom (12, 15, 16) stromabwärts des Hauptladeluftkühlers (14) an die erste (2) und zweite (3) Zylinderbank geführt wird, und wobei je eine Abgasrückführung (18) mit je einem Abgasrückkühler (19) je Zylinderbank (2, 3) vorgesehen ist, mittels welcher gekühltes Abgas (17) der
jeweiligen Zylinderbank (2, 3) in den Ladeluftstrom (12, 15, 16) zur jeweiligen Zylinderbank (2, 3) stromabwärts des Hauptladeluftkühlers (14) einbringbar ist.

3. V-Motor (1) nach einem der vorhergehenden Ansprüche, **dadurch gekennzeichnet, dass** der Hauptladeluftkühler (14) zwischen den Schenkeln der V-Form des V-Motors (1) angeordnet ist.

4. V-Motor (1) nach einem der vorhergehenden Ansprüche, **dadurch gekennzeichnet, dass** Abgas (17) von je einer Zylinderbank, (2, 3) mittels eines Mischerelements (29) in einen Ladeluftstrom (12, 15, 16) stromabwärts des Hauptladeluftkühlers (14) eingebracht wird.

5. V-Motor (1) nach Anspruch 4, **dadurch gekennzeichnet, dass** das Mischerelement (29) an einer dem Hauptabtriebselement (23) abgewandten Stirnseite (30) des Hauptladeluftkühlers (14) angeordnet ist.

6. V-Motor (1) nach einem der vorhergehenden Ansprüche, **dadurch gekennzeichnet, dass** die Abgasrückkühler (19) und/oder die Hochdruckabgasturbolader (6, 7) und/oder die Niederdruckabgasturbolader (4, 5) und/oder der Hauptladeluftkühler (14) und/oder die Zwischenladeluftkühler (13) symmetrisch zu einer Mittelachse B des V-Motors (1) angeordnet sind.

7. V-Motor (1) nach einem der vorhergehenden Ansprüche, **dadurch gekennzeichnet, dass** die Niederdruckabgasturbolader (4, 5) sowie die Hochdruckabgasturbolader (6, 7) an einer Kraftseite (20) des V-Motors (1) angeordnet sind.

8. V-Motor (1) nach einem der vorhergehenden Ansprüche, **dadurch gekennzeichnet, dass** je ein Niederdruckabgasturbolader (4, 5) mit je einem Hochdruckabgasturbolader (6, 7) in Reihe geschaltet an je einer Zylinderbank (2, 3) angeordnet ist.

## Claims

1. V engine (1), in particular a diesel engine, having a first (2) and a second (3) cylinder bank, wherein the V engine (1) is designed for two-stage supercharging by way of a low-pressure exhaust-gas turbocharger (4, 5) and a high-pressure exhaust-gas turbocharger (6, 7), wherein in each case one low-pressure exhaust-gas turbocharger (4, 5) and in each case one high-pressure exhaust-gas turbocharger (6, 7) is arranged on a face-side outer end of the V engine, in each case on one cylinder bank (2, 3), above a main drive output element (23) of the V engine (1), wherein the low-pressure compressors (10) of the first (4) and second (5) low-pressure exhaust-gas turbochargers are connected by way of an interposed induction housing (21), wherein the V engine (1) has, for each cylinder bank (2, 3), an exhaust-gas recirculation cooler (19) arranged above a cylinder head (25), wherein a main charge-air cooler (14) is arranged between the exhaust-gas recirculation coolers (19) arranged above a cylinder head (25) of each cylinder bank (2, 3), and wherein, on each cylinder bank (2, 3), there is provided in each case one separate charge-air intercooler (13) which is arranged between in each case one exhaust-gas recirculation cooler (19), arranged on the respective cylinder bank (2, 3), and the low-pressure and high-pressure exhaust-gas turbochargers (4, 5, 6, 7), arranged at the face side, of the cylinder bank (2, 3).

2. V engine (1) according to Claim 1, **characterized in that** the V engine (1) has, in a first (8) and a second charge-air tract (9) for conducting a charge-air flow (12) and in each case as viewed in the flow direction, a low-pressure compressor (10), a charge-air intercooler (13) and a high-pressure compressor (11), wherein in each case one low-pressure compressor (10) is arranged in each low-pressure exhaust-gas turbocharger (4, 5) and in each case one high-pressure compressor (11) is arranged in each high-pressure exhaust-gas turbocharger (6, 7), and wherein the first (8) and the second (9) charge-air tract are merged at a main charge-air cooler (14), wherein in each case one charge-air flow (12, 15, 16) is conducted, downstream of the main charge-air cooler (14), to the first (2) and second (3) cylinder bank, and wherein in each case one exhaust-gas recirculation arrangement (18) with in each case one exhaust-gas recirculation cooler (19) is provided for each cylinder bank (2, 3), by means of which exhaust-gas recirculation arrangement cooled exhaust gas (17) of the respective cylinder bank (2, 3) can be introduced into the charge-air flow (12, 15, 16) to the respective cylinder bank (2, 3) downstream of the main charge-air cooler (14).

3. V engine (1) according to one of the preceding claims, **characterized in that** the main charge-air cooler (14) is arranged between the limbs of the V shape of the V engine (1).

4. V engine (1) according to one of the preceding claims, **characterized in that** exhaust gas (17) from each cylinder bank (2, 3) is introduced by way of a mixer element (29) into a charge-air flow (12, 15, 16) downstream of the main charge-air cooler (14).

5. V engine (1) according to Claim 4, **characterized in that** the mixer element (29) is arranged on a face side (30), averted from the main drive output element (23), of the main charge-air cooler (14).

6. V engine (1) according to one of the preceding claims, **characterized in that** the exhaust-gas recirculation cooler (19) and/or the high-pressure exhaust-gas turbochargers (6, 7) and/or the low-pressure exhaust-gas turbochargers (4, 5) and/or the main charge-air cooler (14) and/or the charge-air intercooler (13) are/is arranged symmetrically with respect to a central axis B of the V engine (1).

7. V engine (1) according to one of the preceding claims, **characterized in that** the low-pressure exhaust-gas turbochargers (4, 5) and the high-pressure exhaust-gas turbochargers (6, 7) are arranged on a power side (20) of the V engine (1).

8. V engine (1) according to one of the preceding claims, **characterized in that** in each case one low-pressure exhaust-gas turbocharger (4, 5) connected in series with in each case one high-pressure exhaust-gas turbocharger (6, 7) is arranged on each cylinder bank (2, 3).

## Revendications

1. Moteur en V (1), en particulier un moteur diesel, comprenant une première (2) et une deuxième (3) rangée de cylindres, le moteur en V (1) étant réalisé en vue d'une suralimentation à deux étages au moyen d'un turbocompresseur à gaz d'échappement à basse pression (4, 5), ainsi que d'un turbocompresseur à gaz d'échappement à haute pression (6, 7), un turbocompresseur à gaz d'échappement à basse pression (4, 5) ainsi qu'un turbocompresseur à gaz d'échappement à haute pression (6, 7) étant disposés à chaque fois au niveau d'une extrémité extérieure frontale du moteur en V au niveau d'une rangée de cylindres respective (2, 3) au-dessus d'un élément de sortie principal (23) du moteur en V (1), les compresseurs à basse pression (10) du premier (4) et du deuxième (5) turbocompresseur à gaz d'échappement à basse pression étant connectés au moyen d'un boîtier d'admission (21) disposé entre eux, le moteur en V (1) présentant, pour chaque rangée de cylindres (2, 3), un refroidisseur de gaz d'échappement de suralimentation (19) disposé au-dessus d'une culasse (25), un refroidisseur d'air de suralimentation principal (14) étant disposé entre les refroidisseurs de gaz d'échappement de suralimentation (19) disposés au-dessus d'une culasse (25) d'une rangée de cylindres respective (2, 3), et un refroidisseur d'air de suralimentation intermédiaire séparé (13) étant à chaque fois prévu au niveau de chaque rangée de cylindres (2, 3), lequel est disposé entre un refroidisseur de gaz d'échappement de suralimentation (19) disposé à chaque fois au niveau de la rangée de cylindres respective (2, 3) et les turbocompresseurs à gaz d'échappement à basse pression et à haute pression (4, 5, 6, 7) de la rangée de cylindres (2, 3) disposés du côté frontal.

2. Moteur en V (1) selon la revendication 1, **caractérisé en ce que** le moteur en V (1) présente, dans une première section d'air de suralimentation (8) et une deuxième section d'air de suralimentation (9), pour guider un flux d'air de suralimentation (12) à chaque fois dans la direction d'écoulement, un compresseur à basse pression (10), un refroidisseur d'air de suralimentation intermédiaire (13) ainsi qu'un compresseur à haute pression (11), un compresseur à basse pression (10) étant disposé à chaque fois dans un turbocompresseur à gaz d'échappement à basse pression respectif (4, 5) et un compresseur à haute pression (11) étant disposé à chaque fois dans un turbocompresseur à gaz d'échappement à haute pression respectif (6, 7) et la première section d'air de suralimentation (8) et la deuxième section d'air de suralimentation (9) étant réunies au niveau d'un refroidisseur d'air de suralimentation principal (14), un flux d'air de suralimentation (12, 15, 16) étant à chaque fois guidé en aval du refroidisseur d'air de suralimentation principal (14) à la première rangée de cylindres (2) et à la deuxième rangée de cylindres (3), et une recirculation de gaz d'échappement (18) étant à chaque fois prévue avec un refroidisseur de gaz d'échappement de suralimentation (19) respectif pour chaque rangée de cylindres (2, 3), au moyen de laquelle recirculation de gaz d'échappement, du gaz d'échappement refroidi (17) de la rangée de cylindres respective (2, 3) peut être introduit dans le flux d'air de suralimentation (12, 15, 16) vers la rangée de cylindres respective (2, 3) en aval du refroidisseur d'air de suralimentation principal (14).

3. Moteur en V (1) selon l'une quelconque des revendications précédentes, **caractérisé en ce que** le refroidisseur d'air de suralimentation principal (14) est disposé entre les branches de la forme en V du moteur en V (1).

4. Moteur en V (1) selon l'une quelconque des revendications précédentes, **caractérisé en ce que** le gaz d'échappement (17) est introduit depuis une rangée de cylindres respective (2, 3) au moyen d'un élément de mélange (29) dans un flux d'air de suralimentation (12, 15, 16) en aval du refroidisseur d'air de suralimentation principal (14).

5. Moteur en V (1) selon la revendication 4, **caractérisé en ce que** l'élément de mélange (29) est disposé au niveau d'un côté frontal (30) du refroidisseur d'air de suralimentation principal (14) opposé à l'élément de sortie principal (23).

6. Moteur en V (1) selon l'une quelconque des revendications précédentes, **caractérisé en ce que** le refroidisseur de gaz d'échappement de suralimentation (19) et/ou le turbocompresseur à gaz d'échappement à haute pression (6, 7) et/ou le turbocompresseur à gaz d'échappement à basse pression (4, 5) et/ou le refroidisseur d'air de suralimentation principal (14) et/ou le refroidisseur d'air de suralimentation intermédiaire (13) sont disposés de manière symétrique par rapport à un axe médian B du moteur en V (1).

7. Moteur en V (1) selon l'une quelconque des revendications précédentes, **caractérisé en ce que** le turbocompresseur à gaz d'échappement à basse pression (4, 5) ainsi que le turbocompresseur à gaz d'échappement à haute pression (6, 7) sont disposés au niveau d'un côté de force (20) du moteur en V (1).

8. Moteur en V (1) selon l'une quelconque des revendications précédentes, **caractérisé en ce qu'**un turbocompresseur à gaz d'échappement à basse pression (4, 5) est à chaque fois monté en série avec un turbocompresseur à gaz d'échappement à haute pression respectif (6, 7) au niveau d'une rangée de cylindres respective (2, 3).
